# EUROPÄISCHE PATENTSCHRIFT

(11) **EP 1 435 419 B1**
(45) Veröffentlichungstag und Bekanntmachung des Hinweises auf die Patenterteilung: **14.07.2010**
(21) Anmeldenummer: 03028834.4
(22) Anmeldetag: 16.12.2003
(51) Int. Cl.: E04F 11/18, F16G 11/00, F16G 11/12

(54) **Seilsystem**
Rope system
Système à câble

(30) Priorität: 03.01.2003 DE 10300058
(43) Veröffentlichungstag der Anmeldung: 07.07.2004
(73) Patentinhaber: CARL STAHL GMBH, 73079 Süssen (DE)
(72) Erfinder: Krieger, Thomas, 89558 Treffelhausen (DE)
(74) Vertreter: Bartels & Partner

(56) Entgegenhaltungen:
- DE-A- 19 604 680
- DE-U- 20 007 374
- DE-U- 20 021 549
- DE-U- 29 517 079
- DE-U- 29 915 271

## Beschreibung

Die Erfindung betrifft ein Seilsystem mit den Merkmalen des Oberbegriffes des Patentanspruches 1.

Dahingehende Seilsysteme sind in einer Vielzahl von Ausführungsformen auf dem Markt frei erhältlich. Insbesondere die moderne Architektur hat dahingehende Seil systeme als wichtiges Gestaltungselement erkannt und neben ihrem formschönen Aussehen und ihrem Einsatz als Geländerfüllung erfüllen sie dort auch sicherheitstechnische Anforderungen im Sinne eines Absturzschutzes. Weitere Anwendungsfälle sind denkbar im Bereich von Abhängungen, beispielsweise bei Regalsystemen im Ausbaubereich von Läden oder Messen. Auch sind Einsatzfälle denkbar zum Erstellen von sog. Fassadenbegrünungen, wo ein Seilsystem an der Außenwand eines Gebäudes angebracht als Rankhilfe für einschlägige Kletterpflanzen od. dgl. dient. Meist sind von der Ausrüstungsseite her die feststehenden Teile, wie Profile von Treppen- oder Balkongeländer, Abhängeschienen oder Fassadenbereiche bereits fest vorgegeben und das ein- oder anzubringende Seilsystem soll sich den Gegebenheiten vor Ort entsprechend anpassen. Solange die vorgenannten gegebenen gebäudeseitigen Ausrüstungsstrukturen sich entlang von rechten Winkeln orientieren, kann das Seilsystem dahingehenden Geometrien regelmäßig nachfolgen, ohne dass größere bauliche Anpassungen bei dem Seilsystem notwendig sind. Sollen aber beispielsweise schiefwinklig entlang eines vorgebbaren Steigungswinkels a verlaufende Seile an geradlinig horizontal oder vertikal befestigten Profilabschnitten, beispielsweise in Form von Treppen- oder Geländerprofilen, eingreifen bzw. diese Profile durchgreifen, ist ein erhöhter Festlegeaufwand für das Seilsystem notwendig.

In Abhängigkeit von der Festlegesituation des Seilsystems an den feststehenden Ausrüstungsteilen, wie Treppen- oder Balkonprofilen, ist für jeden vorhandenen Steigungswinkel das Seilsystem insbesondere dergestalt anzupassen, dass ein jeweils speziell angepaßtes Formanschlußstück für die jeweilige Festlegeaufgabe gefertigt wird, wobei der Steigungswinkel für das Verbindungsseil sich als anzubringende Neigung bei dem genannten Formanschlußstück des Seilsystems wiederfindet. Entlang dieser jeweils vorzugebenden geneigten Fläche des Formanschlußstückes liegt dieses an den feststehenden Teilen, wie den Profilen od. dgl., dann an.

Die dahingehend bekannten Seilsysteme sind zwar gleichfalls als formschön und ästhetisch zu bezeichnen, stellen jedoch den Hersteller vor das Problem, dass er für jede Baugestaltung mit sich hieraus ergebenden unterschiedlichen Steigungswinkeln eigenständige Formanschlußstücke herstellen und bevorraten muß; letzteres insbesondere dann, wenn er sicherstellen will, dass er bei entsprechender Kundenanfrage unmittelbar ein dahingehend speziell adaptiertes System dem Kunden zur Verfügung stellen möchte. In der Praxis hat sich jedoch gezeigt, dass selbst bei einer sehr umfangreichen Lagerhaltung sich nicht jeder Kundenwunsch in kurzer Zeit dergestalt realisieren läßt.

Durch die DE-A-196 04 680 ist ein gattungsgemäßes Seilsystem bekannt mit mindestens einem Verbindungsseil vorgebbarer Länge, insbesondere in Form eines Drahtseils, das endseitig mit einem Abschlußteil versehen ist, das zum Festlegen des Seilsystems an feststehenden Profilen, wie beispielsweise Treppengeländer- oder Balkonprofilen, mit einem Formanschlußstück als Teil des Seilsystems zusammenwirkt, wobei das Seil mit seinem Abschlußteil durch eine Öffnung im Profil hindurchgeführt ist, wobei das Abschlußteil zumindest an seinem einen freien Ende ein Formstück mit mindestens einer gekrümmt verlaufenden Anlagefläche aufweist, die zum Festlegen des Verbindungsseils an mindestens einer entsprechend gekrümmt ausgebildeten Aufnahmefläche des Formanschlußstückes zur Anlage kommt.

Bei der bekannten Lösung ist das Formanschlußstück für eine Anlage mit dem zuordenbaren Profil als gelochte Ringscheibe ausgebildet, die zum Formstück hin gerichtet, kalottenartig eine konvex gekrümmte Aufnahmefläche aufweist, längs der eine entsprechend konkav gekrümmt ausgebildete Anlagefläche des ansonsten zylindrisch ausgebildeten Formstückes zur Anlage kommt. Das freie Ende des Verbindungsseiles durchgreift mit einem Abschlußteil mit Außengewinde sowohl das Formstück als auch das Formanschlußstück und mittels einer aufschraubbaren Befestigungsschraube läßt sich das Seilsystem gegen das Profil verspannen, in dem Formstück nebst Formanschlußstück gegen das Profil gezogen werden, das von dem Seil nebst Abschlußteil durchgriffen ist. Mit dem dahingehend bekannten Seilsystem läßt sich zwar ein größerer Bereich an Neigungen und mithin an Steigungswinkeln des Verbindungsseiles abdecken, ohne gleich auf weitere eigenständige Formanschlußstücke zurückgreifen zu müssen; dennoch sind die Einstellmöglichkeiten betreffend den Steigungswinkel eingeschränkt.

Durch das DE-U-295 17 079 ist ein anderes Seilsystem bekannt, mit einem Verbindungsseil vorgebbarer Länge, das endseitig mit einem Abschlußteil versehen ist, das zum Festlegen des Seilsystems an feststehenden Teilen mit einem Formanschlußstück als Teil des Seilsystems zusarnmenwirkt, wobei das Abschlußteil an seinem einen freien Ende ein Formstück mit einer gekrümmt verlaufenden Anlagefläche aufweist, die zum Festlegen des Verbindungsseils an mindestens einer entsprechend gekrümmt ausgebildeten Aufnahmefläche des Formanschlußstückes zur Anlage kommt, wobei das Formanschlußstück einen seitlich in die Umgebung mündenden Eingriffschlitz aufweist, für den seitlichen Eingriff eines Teils eines Verbindungsteils, wobei das Abschlußteil das Verbindungsteil aufweist, das an seinem einen freien Ende die gekrümmte Anlagefläche aufweist und an seinem anderen Ende ein Anschlußstück für die Verbindung mit einem Anschlußteil am Ende des Verbindungsseils, und wobei das Formanschlußstück außenumfangsseitig zylindrisch ist. Bei der bekannten Lösung ist das Formanschlußstück zum Durchlass des Schaftes des Verbindungsteiles durchgefräst und nach oben ausgefräst, so dass das Formanschlußstück über einen entsprechenden Eingriffschlitz verfügt. Bei dem bekannten System wird das Formanschlußstück an einer Wand oder Decke befestigt; weitergehende Festlegemöglichkeiten sind jedoch durch diesen Stand nicht aufgezeigt.

Ausgehend von diesem Stand der Technik liegt der Erfindung die Aufgabe zugrunde, die bekannten Seilsysteme unter Beibehalten ihrer Vorteile, insbesondere unter Beibehalten ihres formschönen Aussehens, dahingehend weiter zu verbessern, dass eine universell einsetzbare Lösung geschaffen ist, mit der sich eine Vielzahl von Anwendungsfällen und Festlegemöglichkeiten unabhängig von den auftretenden Steigungswinkel unmittelbar realisieren läßt, ohne dass hierfür eine aufwendige Bevorratung oder Lagerhaltung an Formanschlußstücken notwendig wäre.

Eine dahingehende Aufgabe löst ein Seilsystem mit den Merkmalen des Patentanspruches 1 in seiner Gesamtheit. Dadurch, dass gemäß dem kennzeichnenden Teil des Patentanspruches 1 die jeweilige Anlagefläche des Formstückes konvex gekrümmt ist, insbesondere in der Art einer Kugel, und dass die jeweilige Aufnahmefläche des Formanschlußstückes eine der konvexen Krümmung angepaßte konkave Krümmung aufweist, kann das Formstück innerhalb vorgebbarer Grenzen in einem weiten Umfang am Formanschlußstück beliebig lagefixiert werden, so dass die in der Praxis vorkommenden Steigungswinkel sich dergestalt durch die gekrümmten Flächen ausgleichen lassen, ohne dass das Formanschlußstück selbst konstruktiv geändert werden müsste. Mit nur einem Teilesatz eines modular aufbauenden Seil-Baukastensystems läßt sich somit eine Vielzahl an Festlegemöglichkeiten abdecken, bei denen das Verbindungsseil mit dem Abschlußteil durch eine Öffnung im Profil hindurchgeführt ist und im Grunde nach muß nur die Länge des Verbindungsseils, die man auch als Konfektionslänge bezeichnet, den Gegebenheiten vor Ort angepaßt werden, was regelmäßig dem Hersteller für dahingehende Systeme keine Probleme bereitet. Es ist für einen Durchschnittsfachmann auf dem Gebiet der Seil- und Seilverbindungssysteme überraschend, dass er auf eine Vielzahl an unterschiedlich ausgebildeten Komponenten, insbesondere in Form einer Vielzahl an Formanschlußstücken, verzichten kann, sofern er die bisher eben ausgebildeten Anlageflächen durch gekrümmte Flächenbereiche ersetzt, die in ihrer Ausgestaltung als paarweise einander zugeordnete, konvex/konkav ausgeformte Anlageteile den gebäudetechnisch vorgegebenen Steigungswinkeln dergestalt ohne weiteres nachfolgen können.

Neben den genannten Vorteilen zeichnet sich das System durch eine besondere Handhabungsfreundlichkeit für den Monteur vor Ort aus, denn das System erklärt sich dem Grunde nach von selbst und es kann mit der erfindungsgemäßen Lösung entgegen dem Stand der Technik nicht passieren, dass das Formanschlußstück falsch eingesetzt und montiert wird mit der Folge, dass man den dahingehenden Fehler erst spät bemerkt und dann erneut zur Korrektur des Fehlers einen kompletten Festlegevorgang für das Seilsystem durchzuführen hat.

Weitere vorteilhafte Merkmalsausgestaltungen sind Gegenstand der sonstigen Unteransprüche.

Im folgenden wird das erfindungsgemäße Seilsystem anhand der Zeichnung näher erläutert. Dabei zeigen in prinzipieller und nicht maßstäblicher Darstellung die
- Fig.1: einen Teil eines Seilsystems, wie es im Stand der Technik bekannt ist;
- Fig.2: eine der Fig.1 entsprechende Darstellung mit dem erfindungsgemäßen Seilsystem;
- Fig.3: in Ansicht das Verbindungsseil mit endseitig angeordneten Abschlußteilen;
- Fig.4: in Seitendarstellung das Verbindungsteil mit Formstück;
- Fig.5,6 und 7: das Formanschlußstück in perspektivischer Draufsicht in einer Seitendarstellung sowie in einer Unteransicht.

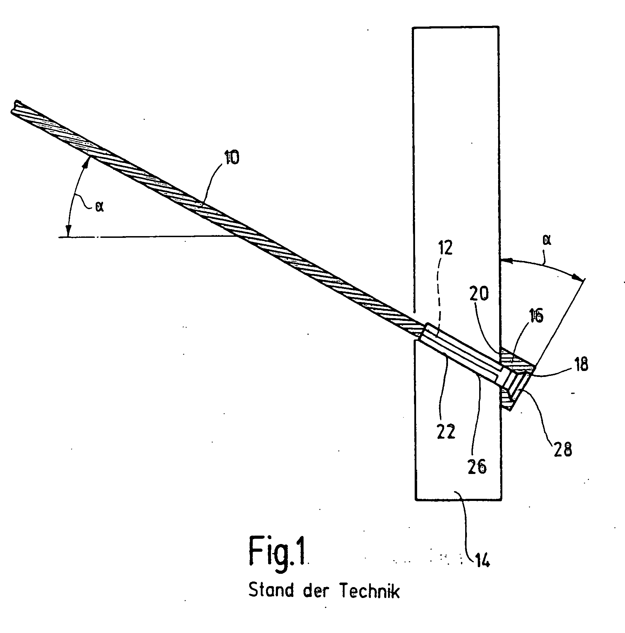

Die Fig.1 zeigt eine Lösung eines Seilsystems, wie sie im Stand der Technik nachweisbar ist. Das bekannte Seilsystem weist ein Verbindungsseil 10 vorgebbarer Länge (Konfektionslänge) auf und besteht insbesondere aus einem Drahtseil, das aus einzelnen Seillitzen in üblicher Weise zusammengesetzt ist. Das dahingehende Verbindungsseil 10 ist endseitig mit einem Abschlußteil 12 versehen, das zum Festlegen des Seilsystems an feststehenden Profilen, wie einem Treppengeländerprofil 14, mit einem Formanschlußstück 16 zusammenwirkt.

Das genannte Treppengeländerprofil 14 ist vertikaler Bestandteil eines ansonsten profilartigen Treppengeländers, das sich in Längsrichtung einer Treppenstufung (nicht dargestellt), insbesondere mit seiner Handlaufgestaltung, ausrichtet. Demgemäß ergibt sich eine hiervon abhängige Neigung des Handlaufes (nicht dargestellt) des eigentlichen Treppengeländers mit seinen Profilteilen und das Seilsystem mit einer Vielzahl von übereinander angeordneten Verbindungsseilen 10 bildet eine Art Geländerfüllung aus, die neben ihrem formschönen Aussehen auch als Absturzschutz für die Treppenbenutzer dient.

Der einfacheren Darstellung wegen wurde in der Fig.1 nur ein Drahtseil 10 dargestellt und hiervon auch nur sein Abschluß an seinem einen Ende; eine vergleichbare Verbindungslösung ist aber auch am gegenüberliegenden Ende (nicht dargestellt) des Drahtseils 10 vorgesehen. In Abhängigkeit von der Geländerbrüstung oder dem Geländerhandlauf sollen die Verbindungsseile 10 des als Geländerfüllung zum Einsatz kommenden Seilsystems der dahingehenden Neigung im wesentlichen mit einem Steigungswinkel a nachfolgen, um insbesondere das formschöne, ästhetische Aussehen nicht zu gefährden. Um den dahingehenden Steigungswinkel a am Verbindungsseil 10 des Seilsystems ausgleichen zu können, weist das Formanschlußstück 16 bei der bekannten Lösung eine zu einer Abschlußebene 18 geneigte eben verlaufende Aufnahmefläche 20 auf, die mit der Abschlußebene 18 gleichfalls den Steigungswinkel a einschließt.

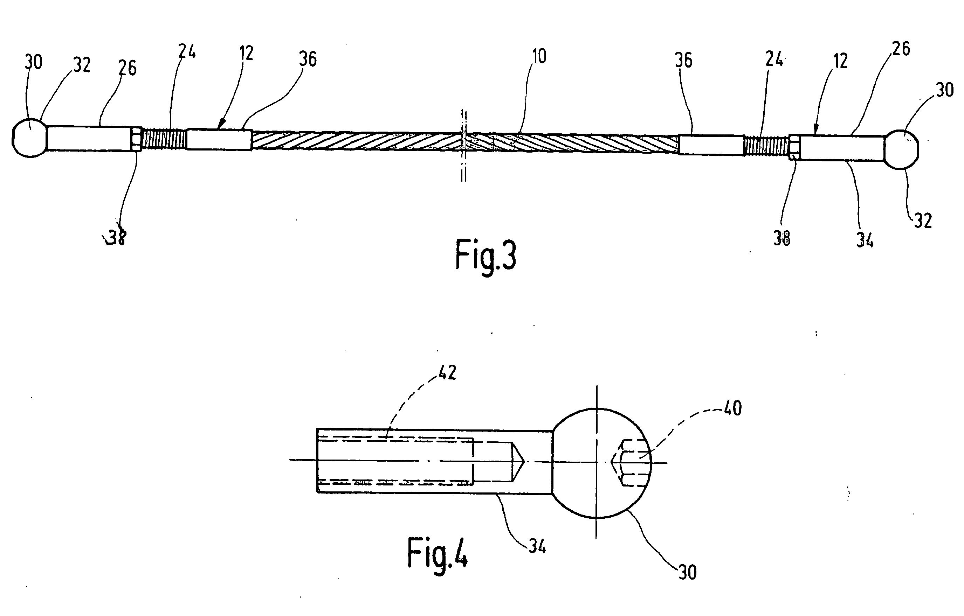

Als Abschlußstück 22 weist das jeweilige Ende des Verbindungsseils 10 ein Außengewinde 24 auf (vgl. Darstellung der Fig.3) und auf dieses Außengewinde ist ein Schraubenteil 26 mit seinem korrespondierenden Innengewinde aufschraubbar, wobei das Schraubenteil 26 an seinem freien Ende einen Schraubenkopf 28 aufweist, der in eine entsprechende Ausnehmung im Formanschlußstück 16 eingreift. Die Länge des Verbindungsseils 10 ist dabei derart konfektioniert, dass mit Festlegen des Schraubenteils 26 auf dem Außengewinde 24 des Verbindungsseils 10 dieses eine Zugspannung erfährt und dann als Seilsystem sich straff zwischen den benachbarten Teilen an Treppengeländerprofilen 14 erstreckt.

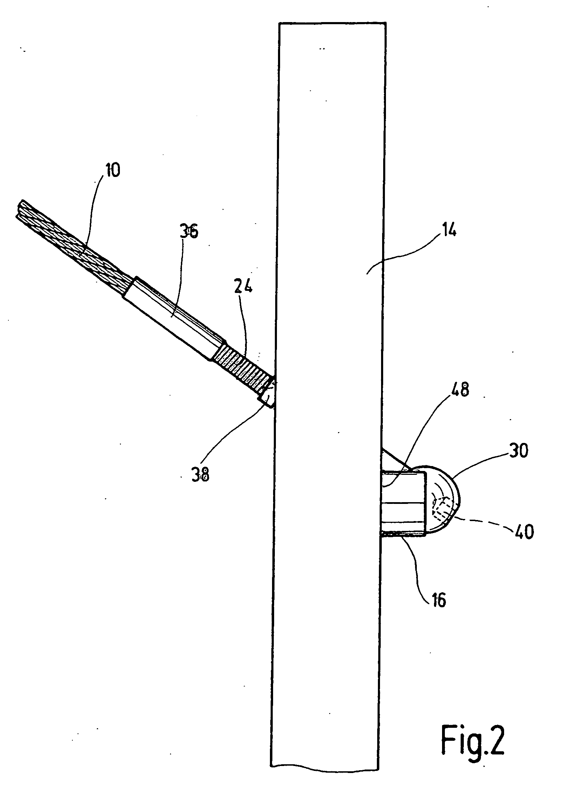

Ändert sich bei einer anderen Ausgestaltung der Steigungswinkel a für das Verbindungsseil 10, beispielsweise weil die Treppe steiler verläuft, tritt das Seil 10 in einem anderen Winkel durch eine Bohrung oder ein Langloch im Treppengeländerprofil 14 hindurch, so dass dann ein entsprechend geändertes Formanschlußstück 16 zum Einsatz kommen muß, wobei wiederum der Winkel α zwischen der Abschlußebene 18 und der Aufnahmefläche 20 des Formanschlußstückes 16 dem Steigungswinkel α des Verbindungsseils 10 zu entsprechen hat, um sicherzustellen, dass die Aufnahmefläche 20 bündig an der Außenseite des Treppengeländerprofils 14 anliegen kann. Letzteres erlaubt eine sichere Einleitung der Zugkräfte über das Abschlußstück 22 in die Profilstruktur des jeweiligen Treppengeländerstückes 14. Für jeden vorhandenen Steigungswinkel des Seilsystems ist also jeweils ein speziell angepaßtes Formanschlußstück 16 notwendig, sofern man ein Seilbefestigungssystem im Stand der Technik nach der Fig.1 realisiert. Ausgehend von dieser bekannten Lösung wird nunmehr anhand der Fig.2ff das erfindungsgemäße Seilsystem vorgestellt, wobei dieselben Bauteile mit denselben Bezugszeichen benannt werden. In der Fig.3 ist zunächst das Verbindungsseil 10 dargestellt, dessen Konfektionslänge entsprechend den bautechnischen Gegebenheiten herstellerseitig gewählt wird. An seinem jeweiligen Ende weist das Verbindungsseil 10 ein als Ganzes mit 12 bezeichnetes Abschlußteil auf, das an seinem jeweils freien Ende mit einem Formstück 30 versehen ist. Das genannte Formstück 30 weist jeweils eine konvex gekrümmt verlaufende Anlagefläche 32 auf in der Art einer Kugel. Diese kugelförmige Anlagefläche 32 ist einstückiger Bestandteil eines Verbindungsteils 34, das das Schraubenteil 26 mit Innengewinde ausbildet. Das dahingehende Verbindungsteil 34 läßt sich auf das Außengewinde 24 des Verbindungsseils 10 an seinem jeweiligen Ende aufschrauben, wobei das dahingehende Außengewinde 24 Bestandteil des hülsenartigen Anschlußteils 36 ist, das auf die freien Enden des Draht- oder Verbindungsseils 10 aufgehämmert ist. Die dahingehende Verbindungstechnik ist üblich, so dass an dieser Stelle hierauf nicht mehr näher eingegangen wird. Insbesondere weist ein Seil mit den Durchmessergrößen 3mm, 4mm und 5mm auf seiten des Außengewindes eine Gewindegröße von M4, M5 bzw. M6 auf. Um das Verbindungsteil 34 sicher am Seilende mit seinem Außengewinde 24 dort festlegen zu können, ist eine Kontermutter 38 auf dem Außengewinde 24 sitzend vorgesehen.

Das Verbindungsteil 34 ist in der Fig.4 im Maßstab 2 : 1 vergrößert wiedergegeben und am freien Ende des Formstückes 30 weist dieses eine Angriffsmöglichkeit 40 auf, insbesondere in Form einer Innensechskant-Ausnehmung für den Angriff eines Festlegewerkzeuges, beispielsweise in Form eines Innensechskantschlüssels (nicht dargestellt). Des weiteren zeigt die Fig.4 das Innengewinde 42, mittels dessen das Verbindungsteil 34 auf das Außengewinde 24 des Verbindungsseils 10 aufschraubbar ist.

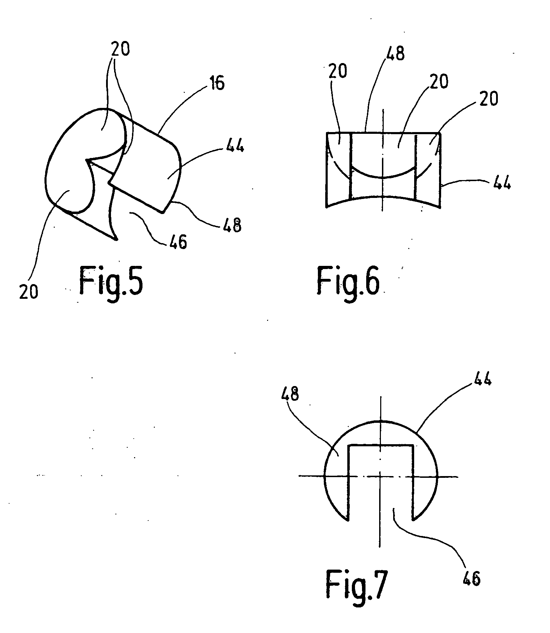

Die Fig.5, 6 und 7 zeigen nunmehr in verschiedenen Ansichten und gleichfalls in zweifacher Vergrößerung das erfindungsgemäße Formanschlußstück 16, das sich grundsätzlich von seinem Aufbau her von der bekannten Lösung nach der Fig.1 unterscheidet. Das erfindungsgemäße Formanschlußstück 16 weist außenumfangsseitig eine zylindrische Außenmantelfläche 44 auf und einen seitlich in die Umgebung mündenden Eingriffsschlitz 46 für den seitlichen Eingriff eines Teils des Verbindungsteils 34, was anhand der Zeichnung nach der Fig.2 noch näher erläutert werden wird. Wie insbesondere die Fig.7 zeigt, ist der Eingriffsschlitz 46 im Querschnitt im wesentlichen rechteckförmig ausgebildet.

Die Aufnahmefläche 20 des erfindungsgemäßen Formanschlußstückes 16 ist konkav gekrümmt und im übrigen in drei Segmente unterteilt, die nahtlos ineinander übergehen. Die dahingehend konkav geformte Aufnahmefläche 20 dient der Aufnahme der konvex gekrümmten Anlagefläche 32 des Formstückes 30 (vgl. Fig.4). Für einen reibungslosen Eingriff entsprechen daher die Krümmungsradien sowohl von Formstück 30 als auch von Formanschlußstück 16 einander. An seiner anderen, der Aufnahmefläche 20 abgekehrten Seite weist das Formanschfußstück 16 eine ebene Begrenzungsfläche 48 auf, die für die spätere Anlage mit dem Treppengeländerprofil 14 vorgesehen ist.

Wie sich aus der Darstellung nach der Fig.2 ergibt, wird das Formanschlußstück 16 mit seiner ebenen Begrenzungsfläche 48 an die Außenseite des Treppengeländerprofils 14 angelegt. Das Seil 10 mit seinem Abschlußteil 12 wird dann durch eine entsprechende Öffnung im Treppengeländerprofil 14 hindurchgeführt, sei es in Form einer genau geneigten Bohrung, sei es in Form eines Langloches, und das kugelkopfförmige Formstück 30 greift dann mit seiner Anlagefläche 32 in das nach oben offene Ende des Formanschlußstückes 16 ein und kommt dort in Anlage mit der konkav geformten Aufnahmefläche 20. Mithin ergibt sich durch die Verbindung von Formstück 30 mit Formanschlußstück 16 eine Art Kugel- oder Gelenkverbindung mit im wesentlichen stationär angeordnetem Formanschlußstück 16, gegenüber dem das Formstück 30 und mithin das Verbindungsteil 34 schwenkbar geführt ist.

Aufgrund der dahingehenden Gelenkbewegung, die seitlich in Richtung der Zeichenebene durch die zylindrische Außenmantelfläche 44 des Formanschlußstückes 16 begrenzt ist, läßt sich das Seil 10 beliebig festlegen, insbesondere unabhängig von dem jeweils vorgegebenen Steigungswinkel α, so dass sich ohne weiteres Winkelbereiche α von 0° bis 60° abdecken lassen. Mithin ist es mit nur einer Art an Formanschlußstücken 16 möglich, in einem weiten Bereich eine Festlegemöglichkeit für das Seilsystem unabhängig von den vorgegebenen Steigungswinkel α zu schaffen. Das Festlegen von Formstück 30 in dem Formanschlußstück 16 geschieht dabei über die bereits genannte Angriffsmöglichkeit 40 für ein nicht näher dargestelltes Verbindungswerkzeug.

Bei einem nicht näher dargestellten Ausführungsbeispiel ist das Formanschlußstück 16 an seinem einen Ende nicht eben ausgebildet, sondern weist vielmehr eine konkav gekrümmte Ausnehmung auf. Die dahingehend konkav geformte Fläche bildet dann eine Art Schmiege aus, mittels der es möglich ist, das erfindungsgemäße Seilsystem auch an Pfostenprofilen festzulegen, die außenumfangsseitig konvex gekrümmt sind, beispielsweise in der Art eines im Querschnitt kreisrunden Pfostenprofils. Vorzugsweise entsprechen dabei einander die Krümmungsradien des Außenumfanges des Pfostenprofils mit der konkaven Ausnehmung des Formanschlußstückes 16.

## Patentansprüche

1. Seilsystem mit mindestens einemVerbindungsseil (10) vorgebbarer Länge, insbesondere in Form eines Drahtseils, das endseitig mit einem Abschlußteil (12) versehen ist, das zum Festlegen des Seilsystems an feststehenden Profilen (14), wie beispielsweise Treppengeländer oder Balkonprofilen, mit einem Formanschlußstück (16) als Teil des Seilsystems zusammenwirkt, wobei das Seil (10) mit seinem Abschlußteil (12) durch eine Öffnung im Profil (14) hindurchführbar ist, wobei das Abschlußteil (12) zumindest an seinem einen freien Ende ein Formstück (30) mit mindestens einer gekrümmt verlaufenden Anlagefläche (32) aufweist, die zum Festlegen des Verbindungsseils (10) an mindestens einer entsprechend gekrümmt ausgebildeten Aufnahmefläche (20) des Formanschlußstückes (16) zur Anlage kommt, **dadurch gekennzeichnet, dass** das Formanschlußstück (16) einen seitlich in die Umgebung mündenden Eingriffschlitz (46) aufweist, für den seitlichen Eingriff eines Teils eines Verbindungsteils (34), wobei das Abschlußteil (12) das Verbindungsteil (34) aufweist, das an seinem einen freien Ende die jeweils gekrümmte Anlagefläche (32) und an seinem anderen Ende ein Anschlußstück für die Verbindung mit einem Anschlußteil (36) am Ende des Verbindungsseils (10) aufweist, wobei das Formanschlußstück (16) außenumfangsseitig zylindrisch (44) ist, wobei die jeweilige Anlagefläche (32) des Formstückes (30) konvex gekrümmt ist, insbesondere in der Art einer Kugel, und wobei die jeweilige Aufnahmefläche (20) des Formanschlußstückes (16) eine der konvexen Krümmung angepaßte konkave Krümmung aufweist.

2. Seilsystem nach Anspruch 1, **dadurch gekennzeichnet, dass** der Eingriffsschlitz (46) in seiner Gebrauchsstellung senkrecht verläuft.

3. Seilsystem nach Anspruch 1 oder 2, **dadurch gekennzeichnet, dass** das Formanschlußstück (16) an seinem einen Ende eben (48) oder gekrümmt ausgebildet ist und an seinem anderen, gegenüberliegenden Ende integriert die jeweils konkav gekrümmte Aufnahmefläche (20) aufweist.

4. Seilsystem nach Anspruch 3, **dadurch gekennzeichnet, dass** die zylindrische Mantelfläche (44) des Formanschlußstückes (16) in der Gebrauchsstellung senkrecht auf der Oberfläche des Profiles (14) steht.

5. Seilsystem nach einem der Ansprüche 1 bis 4, **dadurch gekennzeichnet; dass** der Eingriffsschlitz (46) im Querschnitt im wesentlichen rechteckförmig ist.

6. Seilsystem nach einem der Ansprüche 1 bis 5, **dadurch gekennzeichnet, dass** das Anschlußteil (36) des Verbindungsseils (10) ein Außengewinde (24) aufweist, das in ein Innengewinde des Verbindungsteils (34) eingreift.

7. Seilsystem nach einem der Ansprüche 1 bis 6, **dadurch gekennzeichnet, dass** das Formstück (30) eine Angriffsmöglichkeit (40) für ein Festlegewerkzeug, insbesondere in Form einer Innensechskant - Ausnehmung aufweist.

## Claims

1. A cable system comprising at least one connecting cable (10) of pre-specifiable length, in particular in the form of a wire cable, provided on the end with an end piece (12) which for securing the cable system to fixed profiles (14) such as, for example, stairs banisters or balcony profiles, interacts with a shaped connector (16) as part of the cable system, it being possible to pass the cable (10) through an opening in the profile (14) with its end piece (12), the end piece (12) having at least on its one free end a shaped piece (30) with at least one curved laying surface (32) which comes to rest on at least one correspondingly curved receiving surface (20) of the shaped connector (16) in order to fix the connecting cable (10), **characterised in that** the shaped connector (16) has an engagement slot (46) opening out into the surroundings on the side for side engagement of a part of a connecting part (34), the end piece (12) having the connecting part (34) which has on its one free end the respectively curved laying surface (32) and on its other end has a connector for connection to a connection part (36) on the end of the connecting cable (10), the shaped connector (16) being cylindrical (44) on its outer circumferential side, the respective laying surface (32) of the shaped piece (30) being convexly curved, in particular in the manner of a sphere, and the respective receiving surface (20) of the shaped connector (16) having a concave curve matched to the convex curve.

2. The cable system according to Claim 1, **characterised in that** the engagement slot (46) extends perpendicularly in its position for use.

3. The cable system according to Claim 1 or 2, **characterised in that** the shaped connector (16) is level (48) or curved in form at its one end, and at its other, opposing end has, integrated, the respective concavely curved receiving surface (20).

4. The cable system according to Claim 3, **characterised in that** the cylindrical lateral surface (44) of the shaped connector (16) stands perpendicularly on the surface of the profile (14) in the position for use.

5. The cable system according to any of Claims 1 to 4, **characterised in that** the engagement slot (46) has a substantially rectangularly shaped cross-section.

6. The cable system according to any of Claims 1 to 5, **characterised in that** the connection part (36) of the connecting cable (10) has an external thread (24) which engages in an internal thread of the connecting part (34).

7. The cable system according to any of Claims 1 to 6, **characterised in that** the shaped piece (30) has an engagement possibility (40) for a fixing tool, in particular in the form of a hexagonal recess.

## Revendications

1. Système à câble comprenant au moins un câble (10) de liaison de longueur pouvant être prescrite, notamment sous la forme d'un câble métallique, qui est pourvu du côté de l'extrémité d'une partie (12) de terminaison, qui, pour la fixation du système à câble à des profilés (14) fixes, comme par exemple des rampes d'escalier ou des profilés de balcon, coopère avec une pièce (16) conformée de raccord, comme partie du système à câble, le câble (10) pouvant, par sa partie (12) de terminaison passer dans une ouverture du profilé (14), la partie (12) de terminaison ayant au moins à une extrémité libre une pièce (30) de forme ayant au moins une surface (32) de contact courbée, qui vient, pour la fixation du câble (10) de liaison, en contact avec au moins une surface (20) de réception de la pièce (16) conformée de raccord, **caractérisé en ce que** la pièce (16) conformée de raccord a une fente (46) de pénétration, débouchant latéralement à l'extérieur, pour la pénétration latérale d'une partie de la partie (34) de liaison, la partie (12) de terminaison ayant la partie (34) de liaison qui a l'une de ses extrémités libres, la surface (32) de contact courbée et, à son autre extrémité libre, une pièce de raccord pour la liaison avec une partie (36) de raccord à l'extrémité du câble (10) de liaison, la pièce (16) conformée de raccord étant cylindrique (44) du côté de son pourtour extérieur, la surface (32) de contact respective de la pièce (30) de forme étant convexe, notamment à la manière d'une bille, et la surface (20) respective de réception de la pièce (16) conformée de raccord ayant une courbure concave adaptée à la courbure convexe.

2. Système à câble suivant la revendication 1, **caractérisé en ce que** la fente (46) de pénétration est verticale dans sa position d'utilisation.

3. Système à câble suivant la revendication 1 ou 2, **caractérisé en ce que** la pièce (16) conformée de raccord est plane (48) ou courbée à l'une de ses extrémités et a, de manière intégrée, la surface (20) de réception respectivement concave à son autre extrémité opposée.

4. Système à câble suivant la revendication 3, **caractérisé en ce que** la surface (44) latérale cylindrique de la pièce (16) conformée de raccord est, en la position d'utilisation, perpendiculairement à la surface du profilé (14).

5. Système à câble suivant l'une des revendications 1 à 4, **caractérisé en ce que** la fente (46) de pénétration est de section transversale sensiblement rectangulaire.

6. Système à câble suivant l'une des revendications 1 à 5, **caractérisé en ce que** la partie (36) de raccord du câble (10) de liaison a un filetage (24), qui engrène dans un taraudage de la partie (34) de liaison.

7. Système à câble suivant l'une des revendications 1 à 6, **caractérisée en ce que** la pièce (30) de forme a une possibilité (40) d'attaque pour un outil de fixation, notamment sous la forme d'un logement à six pans intérieurs.
